Europäisches Patentamt

European Patent Office

Office européen des brevets

(11) Veröffentlichungsnummer: **0 283 578**
A2

# (12) EUROPÄISCHE PATENTANMELDUNG

(21) Anmeldenummer: 87118478.4

(22) Anmeldetag: 14.12.87

(51) Int. Cl.⁴ **B64D 33/08** , F01P 5/06 , F01P 11/10

(30) Priorität: 26.03.87 DE 3709924

(43) Veröffentlichungstag der Anmeldung:
28.09.88 Patentblatt 88/39

(84) Benannte Vertragsstaaten:
DE FR GB IT SE

(71) Anmelder: Dr.Ing.h.c. F. Porsche
Aktiengesellschaft
Porschestrasse 42
D-7000 Stuttgart 40(DE)

(72) Erfinder: Hain, Klaus, Dipl.-Ing.
Obere Torstrasse 10
D-7250 Leonberg(DE)
Erfinder: Hochkönig, Manfred, Dipl.-Ing.
Rechbergstrasse 2
D-7141 Möglingen(DE)
Erfinder: Hofbauer, August, Dipl.-Ing.
Wartbergallee 1
D-7530 Pforzheim(DE)

(54) Flugzeug, vorzugsweise Hubschrauber.

(57) Der Hubschrauber wird über einen mit einer Brennkraftmaschine verbundenen Rotor angetrieben. Die luftgekühlte, nach Boxerbauart aufgebaute Brennkraftmaschine ist innerhalb von Wandungen einer Kabine des Hubschraubers angeordnet.

Zur Versorgung der Brennkraftmaschine mit Kühlluft und Ansaugluft sind an den Seitenwandungen der Kabine Lufteinlaßöffnungen vorgesehen. Für den Austritt der Kühlluft sind an der Unterseite der Kabine Auslaßöffnungen angeordnet.

FIG.1

EP 0 283 578 A2

## Flugzeug, vorzugsweise Hubschrauber

Die Erfindung betrifft ein Flugzeug, vorzugsweise Hubschrauber, nach dem Oberbegriff des Patentanspruchs 1.

In der GB-PS 732 452 wird eine senkrecht stehende Boxer-Brennkraftmaschine gezeigt, die einen Rotor eines Fluggerätes antreibt.

Aus der GB-PS 588 317 geht eine Flugzeugbrennkraftmaschine, ebenfalls der Boxerbauart, hervor, deren Zylinder horizontal liegend angeordnet sind.

Aufgabe der Erfindung ist es, an einem von einer Brennkraftmaschine angetriebenen Hubschrauber solche Anordnungen und Vorkehrungen zu treffen, daß unter Sicherstellung einer guten Ansaugluftzuführung die Brennkraftmaschine und ihre Aggregate auch unter extremen Betriebsbedingungen auf sichere Weise mit Kühlluft versorgt werden.

Erfindungsgemäß wird diese Aufgabe durch die kennzeichnenden Merkmale des Anspruchs 1 gelöst.

Die mit der Erfindung hauptsächlich erzielten Vorteile sind darin zu sehen, daß das Kühlluftgebläse und die Sauganlage der Brennkraftmaschine auf einfache und vorteilhafte Art mit dem jeweiligen Medium - Kühlluft, Ansaugluft - versorgt werden, wobei das vorhandene Druckgefälle zwischen Seitenwand und Unterseite der Kabine wirkungsvoll zur Entsorgung der verbrauchten Kühlluft ausgenutzt wird. Die Lufteinlaßöffnungen an den Längsseiten der Kabine, über die ausreichende Menge Luft eintritt, können problemlos in die Seitenwände des Hubschraubers integriert werden. Die Führungskanäle, die Rohranlage und der Auslaßkanal sind leicht herstellbare Teile und können ohne weiteres innerhalb der Kabine verlegt werden.

Die Kühler - Ölkühler und/oder Ladeluftkühler - werden funktionsgerecht von Kühlluft durchströmt. Insbesondere auch wegen des von der Brennkraftmaschine angetriebenen Zusatzgebläses, das gewährleistet, daß bei extremer Flugsituation, beispielsweise Schwebeflug, die Kühler ausreichend mit Kühlluft beaufschlagt werden.

In der Zeichnung wird ein Ausführungsbeispiel der Erfindung gezeigt, das nachstehend näher beschrieben ist.

Es zeigt

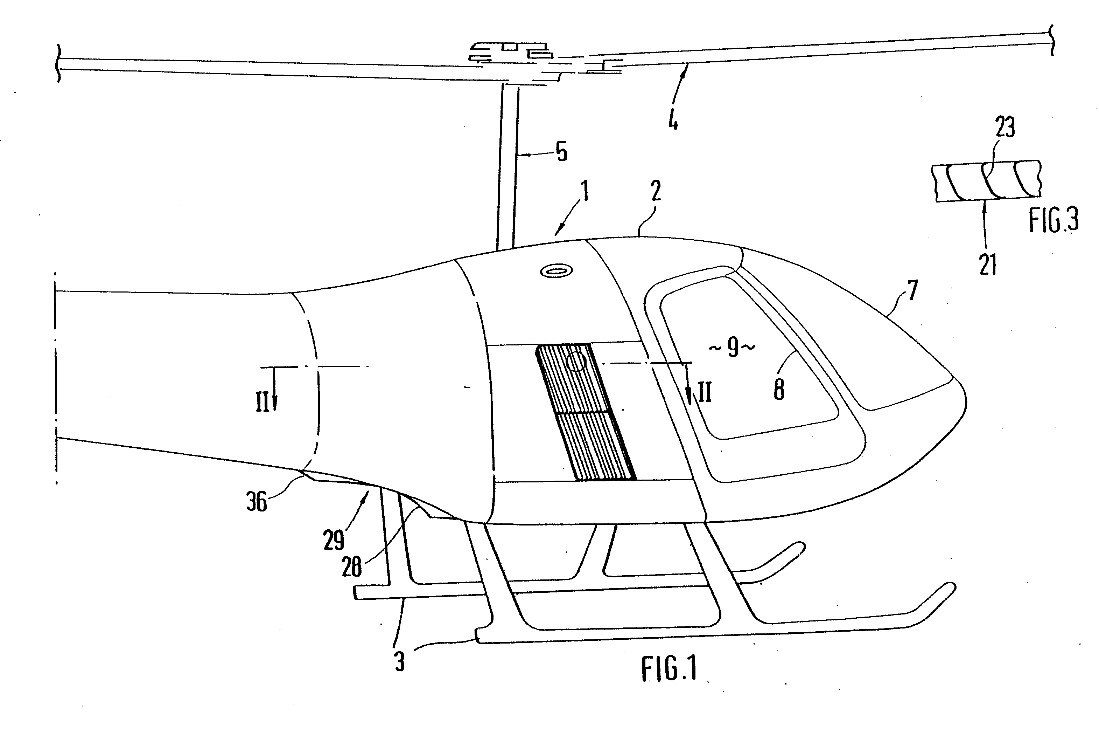

Fig. 1 eine Teilseitenansicht eines Hubschraubers,

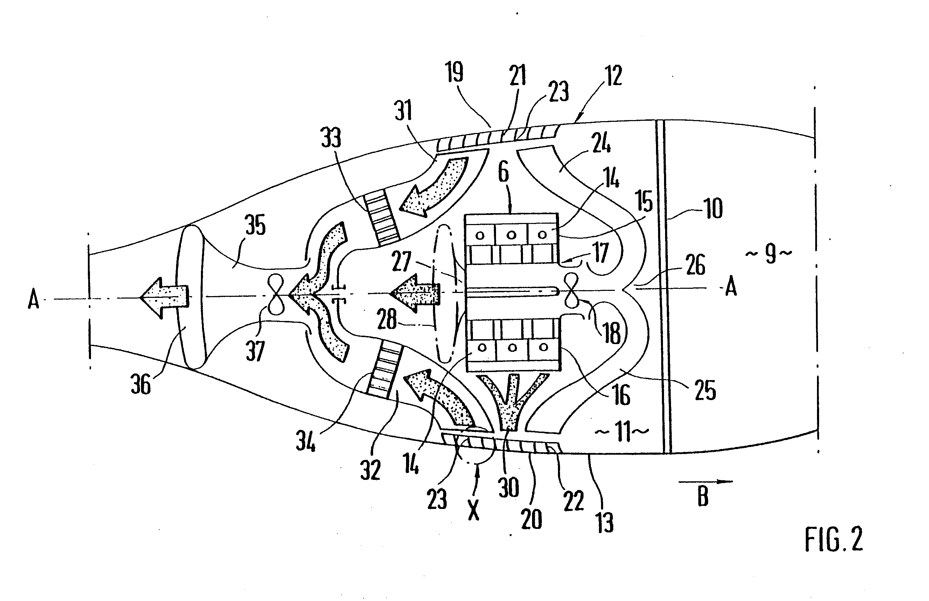

Fig. 2 einen Schnitt nach der Linie II-II der Fig. 1,

Fig. 3 eine Einzelheit X der Fig. 2 in größerem Maßstab.

Ein Hubschrauber 1 umfasst eine Kabine 2, die von Kufen 3 getragen wird. Mit 4 ist ein Rotor bezeichnet, der über eine Welle 5 und unter Vermittlung eines nicht gezeigten Kupplungssystems mit einer Brennkraftmaschine 6 verbunden ist.

Die Kabine 2 weist eine Frontscheibe 7 und Seitentüren 8 auf, die einen Fahrgastraum 9 begrenzen. Der Fahrgastraum 9 ist mittels einer Querwand 10 von einem Aggregateraum 11 getrennt. Außerdem besitzt die Kabine 2 Seitenwände 12, 13, die etwa im Bereich der Querwand 10 die größte Distanz zueinander haben.

Die Brennkraftmaschine 6 der Kolbenbauart ist luftgekühlt, wobei ihre sechs Zylinder 14 in zwei Reihen 15, 16, und zwar in einer gemeinsamen Ebene , angeordnet sind, derart, daß die Brennkraftmaschine Boxerform aufweist.

Im Ausführungsbeispiel ist die Brennkraftmaschine 6 liegend in einer Mittellängsebene A-A des Hubschraubers 1 angeordnet, d.h., die Zylinderreihen 15, 16 verlaufen etwa in einer horizontalen Ebene. Darüber hinaus ist die Brennkraftmaschine 6 an ihrer Vorderseite 17 - in Flugrichtung B gesehen - mit einem Kühlgebläse 18 ausgerüstet, das unter Zwischenschaltung eines Getriebes von ihrer Kurbelwelle angetrieben wird. Letzteres ist nicht dargestellt.

Zur Versorgung der Brennkraftmaschine mit Kühlluft und Ansaugluft sind an den Seitenwänden 12, 13 Einlaßöffnungen 19, 20 vorgesehen, die mit Gittern 21, 22 ausgestattet sind. Die Gitter 21, 22 sind mit Lamellen 23 versehen, deren Form das Eindringen von Schmutzpartikeln in die Lufteinlaßöffnungen weitgehend verhindert (Fig. 3).

Zwischen den Lufteinlaßöffnungen 19, 20 und dem Kühlluftgebläse 18 erstrecken sich Führungskanäle 24, 25, die bei 26 zusammengeführt sind. Das die Brennkraftmaschine 6 verlassende erwärmte Kühlmedium tritt etwa bei 27 aus ihr heraus und verläßt die Kabine 2 durch eine Auslaßöffnung 28 an der Unterseite 29 der besagten Kabine 2. Damit wird ein vorhandenes Druckgefälle zwischen den Seitenwänden 12, 13 und der Unterseite 29 zur Versorgung und Entsorgung der Kühlluft genutzt.

Die Ansaugluft kann über eine Rohranlage 30 zu einem nicht näher dargestellten Ansaugstutzen der Brennkraftmaschine 6 geführt werden. Es besteht aber auch die Möglichkeit, daß die Brennkraftmaschine 6 mit diesem Medium durch die Umgebungsluft in dem Aggregateraum 11 versorgt wird, der ja über die Lufteinlaßöffnungen 19, 20 mit der Außenseite der Kabine 2 verbunden ist.

Ferner sind an der Innenseite der Kabine 2 von den Lufteinlaßöffnungen 19, 20 Führungskanäle 31, 32 weggeführt, die sich in Richtung Heck des Hubschraubers 1 erstrecken. In die Führungskanäle 31, 32 eingesetzt sind Kühler 33, 34, wobei der Kühler 33 ein Ladeluftkühler und der Kühler 34 ein Ölkühler ist. Die Führungskanäle 31, 32 sind gabelartig an einen sich in der Mittellängsebene B-B erstreckenden Auslaßkanal 35 angeschlossen, dessen Austrittsöffnung 36 ebenfalls an der Unterseite 29 der Kabine 2 angebracht ist. Die Austrittsöffnung 36 und die Austrittsöffnung 28 sind an verschiedenen Stellen der Kabine angebracht.

Schließlich ist in dem Auslaßkanal 35 ein Zusatzgebläse 37 angeordnet, das den Kühlern 34, 35 nachgeschaltet ist. Das Zusatzgebläse 37 wird von der Kurbelwelle der Brennkraftmaschine 6 angetrieben.

## Ansprüche

1. Flugzeug, vorzugsweise Hubschrauber, der von einer Brennkraftmaschine der Kolbenbauart mittels eines Rotors angetrieben wird, wobei die Brennkraftmaschine innerhalb von Wandungen einer Kabine angeordnet ist, dadurch gekennzeichnet, daß die an sich bekannte, namentlich luftgekühlte und nach Boxerbauart aufgebaute Brennkraftmaschine (6) liegend in die Kabine (2) eingebaut ist und mit Kühlluft und Ansaugluft über wenigstens eine an einer Seitenwand (12 oder 13) der Kabine (2) angebrachte Lufteinlaßöffnung (19 oder 20) versorgt wird.

2. Flugzeug nach Anspruch 1, dadurch gekennzeichnet, daß an beiden Längsseiten (12, 13) der Kabine (2) Lufteinlaßöffnungen (19, 20) vorgesehen sind.

3. Flugzeug nach den Ansprüchen 1 und 2, dadurch gekennzeichnet, daß zwischen den Lufteinlaßöffnungen (19, 20) und einem Kühlluftgebläse (18) der Brennkraftmaschine Führungskanäle (24, 25) für die Kühlluft vorgesehen sind.

4. Flugzeug nach Anspruch 3, dadurch gekennzeichnet, daß das Kühlluftgebläse - in Flugrichtung (B) gesehen - an der Vorderseite (17) der Brennkraftmaschine (6) vorgesehen ist und daß die die Brennkraftmaschine (6) verlassende erwärmte Kühlluft durch eine Auslaßöffnung (28) an der Unterseite (29) der Kabine (2) austritt.

5. Flugzeug nach Anspruch 1, dadurch gekennzeichnet, daß zwischen den Lufteinlaßöffnungen (19 und 20) und einem Ansaugstutzen der Brennkraftmaschine (6) die Ansaugluft in einer Rohranlage (30) geführt wird.

6. Flugzeug nach den Ansprüchen 1 und 2, dadurch gekennzeichnet, daß von den Lufteinlaßöffnungen (19, 20) weitere Führungskanäle (31, 32) weggeführt sind, in die Kühler (33, 34) der Brennkraftmaschine (6) eingesetzt sind.

7. Flugzeug nach Anspruch 6, dadurch gekennzeichnet, daß die Führungskanäle (31, 32) gabelartig an einen Auslaßkanal (35) angeschlossen sind, dessen Austrittsöffnung (36) an der Unterseite (29) der Kabine (2) vorgesehen ist.

8. Flugzeug nach Anspruch 7, dadurch gekennzeichnet, daß in den Auslaßkanal (35) ein den Kühlern (33, 34) vorzugsweise nachgeschaltetes Zusatzgebläse (37) vorgesehen ist.

9. Flugzeug nach den Ansprüchen 1 und 8, dadurch gekennzeichnet, daß das Zusatzgebläse (37) von der Brennkraftmaschine (6), vorzugsweise ihrer Kurbelwelle, angetrieben wird.

10. Flugzeug nach den Ansprüchen 1 bis 3, 5 und 6, dadurch gekennzeichnet, daß die Lufteinlaßöffnungen (19, 20) mit Gittern (21, 22) versehen sind.

11. Flugzeug nach Anspruch 10, dadurch gekennzeichnet, daß die Gitter (21, 22) mehrere aufrecht an der Kabine (2) verlaufende Lamellen (23) aufweisen, die einen solchen Formverlauf besitzen, daß das Eindringen von Schmutzpartikeln in die Lufteinlaßöffnungen (19, 20) weitgehend verhindert wird.

23

FIG.3

21

4

5

1    2

7

~9~

II

8

II

0 283 578

36

29

28

3

FIG.1

FIG.2

0 283 578